(19)

Europäisches
Patentamt
European
Patent Office
Office européen
des brevets

(11)  **EP 2 146 474 A1**

(12)  **EUROPEAN PATENT APPLICATION**

(43) Date of publication:
　　 **20.01.2010 Bulletin 2010/03**

(51) Int Cl.:
　　 *H04L 27/36* (2006.01)

(21) Application number: **08305399.1**

(22) Date of filing: **15.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Alcatel Lucent**<br>**75008 Paris (FR)** | (72) Inventor: **Yu, Xin**<br>**70435 Stuttgart (DE)**<br><br>(74) Representative: **Wetzel, Emmanuelle**<br>**Alcatel Lucent**<br>**Intellectual Property & Standards**<br>**70430 Stuttgart (DE)** |

(54)　**A method for calculating predistortion parameters, a transmitter, a base station, a mobile station, and a communication network therefor**

(57)　　The invention concerns a method for calculating a vector *A* comprising predistortion parameters for a predistorter (PD) of a power amplifier (PA) using a matrix equation $M_x \cdot A = Y$ with a matrix $M_x$, based on output values of the power amplifier (PA) and a vector *Y* based on input values of the power amplifier (PA), whereby the matrix $M_x$ is decomposed to $M_x = N - P$, the decomposition $M_x = N - P$ fulfills the convergence condition $\|N^{-1} \cdot P\| < 1$ an iterative solution with k iterative steps for solving the matrix equation is applied according to $N \cdot A^{(k+1)} = P \cdot A^{(k)} + Y$, and the predistortion parameters comprised in the vector A are applied in the predistorter (PD) for predistortion of signals before the signals are sent to the power amplifier (PA), a transmitter, a base station, a mobile station, and a communication network therefor.

The preferred iterative methods applied are the Gauss-Seidel and the successive overrelaxation.

Fig. 1

**Description**

The invention relates to a method for calculating predistortion parameters according to the preamble of claim 1, a transmitter according to the preamble of claim 6, a base station according to the preamble of claim 7, a mobile station according to the preamble of claim 8, and a communication network according to the preamble of claim 9.

Wireless communication systems like e.g. Universal Mobile Telecommunications System (UMTS) or Third Generation Partnership Project Long Term Evolution (3GPP LTE) require power amplifiers with high output power at frequencies up to 2.6 GHz. However, these power amplifiers are a major source of nonlinearities. In order to achieve high efficiency, the power amplifiers are often driven deep into the saturation region. This results not only in spectral regrowth due to so-called inter-modulation distortion products (IMD) but also in in-band distortion. Therefore power amplifier linearization is always necessary in modern communication systems to suppress spectral regrowth and to reduce the error vector magnitude (EVM).

There are several linearization techniques with different algorithms. The so-called digital predistortion (DPD) is one of the popular linearization techniques because of its good properties concerning overall module efficiency, implementation effort and adaptation possibilities. The computation of predistortion parameters is carried out by solving a system of equations with a least mean square (LMS) method. The stability of this algorithm is totally dependent on its matrix condition. The digital predistortion system of equation may become more and more instable with increasing complexity of the digital predistortion algorithm, e.g. if higher order polynomial is used for predistortion. An indicator for the stability of a digital predistortion system is the so-called condition number of the matrix, i.e. a higher condition number indicates a less stable digital predistortion.

In the paper "A Least-Squares/Newton Method for Digital Predistortion of Wideband Signals", Lei Ding et al., IEEE Transactions on Communications, vol. 54, No. 5, May 2006, pages 833-840, a least-square method for estimation of predistortion parameters for a predistorter with memory structure is proposed.

There are several techniques to increase the stability of digital predistortion systems, i.e. to reduce the matrix condition number. For example orthogonal technique is often utilized to construct an orthogonal matrix with reduced condition number. However, the orthogonal technique can not solve the problem of stability completely, but only alleviates this problem. Furthermore orthogonal technique is not always usable, because sometimes it is difficult to construct an orthogonal matrix for some predistortion algorithms.

The object of the invention is thus to propose a method for calculating predistortion parameters that avoids the problem of high condition numbers that are related to unstable digital predistortion systems.

This object is achieved by a method according to the teaching of claim 1, a transmitter according to the teaching of claim 6, a base station according to the teaching of claim 7, a mobile station according to the teaching of claim 8, and a communication network according to the teaching of claim 9.

The main idea of the invention is to solve the digital predistortion system of equation not by means of a least mean square (LMS) method, but by means of an iterative method based e.g. on the Gauss-Seidel method or the successive overrelaxation method, so that the problem of stability caused by a high matrix condition number is avoided.

Further developments of the invention can be gathered from the dependent claims and the following description.

In the following the invention will be explained further making reference to the attached drawings.

Fig. 1 schematically shows a digital predistortion system with a predistorter, a predistorter learning device and a power amplifier in which the invention can be implemented.

Fig. 2 shows different output spectra of a power amplifier.

Fig. 3 schematically shows a cellular wireless communication system in which the invention can be implemented.

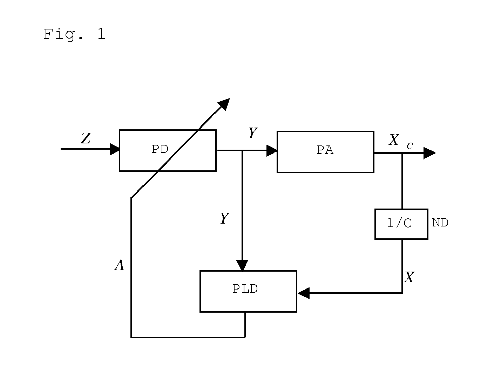

The principle structure of a digital predistortion system used e.g. in a transmitter for signal transmission is shown in fig. 1.

A predistorter PD has a first input for receiving input signals and is connected via an output both to an input of a power amplifier PA and to a first input of an predistorter learning device PLD.

The power amplifier PA has an output for signal transmission to further devices not depicted in fig. 1 and is connected via said output to a normalization device ND.

The normalization device ND is connected via an output to a second input of the predistorter learning device PLD.

The predistorter learning device PLD is connected via an output to a second input of the predistorter PD.

Signals $Z$ are sent to the predistorter PD, and in said predistorter PD, the signals $Z$ are predistorted in order to compensate the nonlinearities of the power amplifier PA. The predistorted signals $Y$ are sent both to the power amplifier PA and the predistorter learning device PLD.

In the power amplifier PA, the predistorted signals $Y$ are amplified, and the amplified signals $X_C$ are transmitted to further devices and via a feedback loop to the normalization device ND.

In the normalization device ND, the amplified signals $X_C$ are divided by the intended amplifier gain C, and the normalized signals $X$ are sent to the predistorter learning device PLD.

The predistorter learning device PLD uses both the normalized signals $X$ and the predistorted signals $Y$, i.e. the output and input signals of the power amplifier PA to calculate the inverse characteristic of the power amplifier PA and thus predistortion parameters $A$. Said predistortion parameters $A$ are sent to the predistorter PD and applied in the predistorter for predistortion of signals $Z$ before the signals are sent to the power amplifier PA in order to compensate the nonlinearities of the power amplifier PA.

According to the prior art, in digital predistortion technique the inverse characteristic of the power amplifier PA, i.e. the predistortion parameters $A$ are calculated by the least mean square (LMS) method as given in equation (1) below. In equation (1), the matrix $M_x$ is based on output values $X_C$ of the power amplifier PA that are normalized, i.e. that are divided by the intended amplifier gain C. $M_x^H$ denotes the Hermitian conjugate matrix of matrix $M_x$ and $M_x^{-1}$ denotes the inverse matrix of matrix $M_x$.

The condition number $cond(M_x)$ of matrix $M_x$ as an indicator for the stability of a digital predistortion system of equations is calculated according to equation (2). The matrix $M_x$ has a condition number ranging normally from several hundreds to ten thousand depending on the signals and algorithms that are used.

The error range $\Delta A$ of the calculated parameter vector $A$ comprising the predistortion parameters can be calculated according to equation (3). It can be seen that the error range $\Delta A$ is dependent on the product of the condition number $cond(M_x)$ of matrix $M_x$ and the error $\Delta Y$ of vector $Y$. Assuming that all data in the matrix equation are normalized to one with 16 bits and assuming we have only the error of quantization $\Delta Y = 2^{-17}$, with the condition number $cond(M_x)$ =150 and $cond(M_x)$=1000 we obtain the parameter error range of $\Delta A = 2^{-12}$ and $\Delta A = 2^{-7}$ respectively. The bad case with large error can cause the divergence of the digital predistortion system. The normal case with small error results in performance variation concerning intermodulation distortion products suppression and error vector magnitude correction.

$$\underbrace{\begin{vmatrix} x_{11} & x_{12} & \cdots \\ x_{21} & x_{22} & \cdots \\ \vdots & \vdots & \vdots \end{vmatrix}}_{M_x} * \underbrace{\begin{vmatrix} a_1 & a_2 & \cdots \end{vmatrix}}_{A} = \underbrace{\begin{vmatrix} y_1 \\ y_2 \\ \vdots \end{vmatrix}}_{Y}$$

$$M_x \cdot A = Y;$$

$$A = (M_x^H \cdot M_x)^{-1} \cdot M_x^H \cdot Y \tag{1}$$

$$cond(M_x) = \|M_x\| \cdot \|M_x^{-1}\|; \qquad \text{with } \|M_x\| = \sqrt{\sum_i^m \sum_j^n x_{ij}^2} \tag{2}$$

$$\frac{\|\Delta A\|}{\|A\|} \leq cond(M_x) \frac{\|\Delta Y\|}{\|Y\|} \tag{3}$$

For an assumed memoryless polynomial relation between the parameters $X$ and $Y$ as indicated in equation (4), the corresponding matrix $M_x$ is given in equation (5). The polynomial terms given on the right side of equation (4) constitute the memoryless main tap. More generally, the equation (4) can comprise further memory taps each from a dedicated point in time from the past and each composed of one or more polynomial terms.

$$y = a_1 x^{k_1} + a_2 x^{k_2} + \cdots + a_m x^{k_m};$$

$$0 \le k_1 < k_2 < \cdots < k_m$$

$$Y = \left[ y(1), y(2), \cdots y(n) \right]^T;$$

$$X = \left[ x(1), x(2), \cdots x(n) \right]^T;$$

$$(4)$$

$$\underbrace{\begin{vmatrix} x(1)^{k_1} & x(1)^{k_2} & \cdots & x(1)^{k_m} \\ x(2)^{k_1} & x(2)^{k_2} & \cdots & x(2)^{k_m} \\ \vdots & \vdots & \ddots & \vdots \\ x(n)^{k_1} & x(n)^{k_2} & \cdots & x(n)^{k_m} \end{vmatrix}}_{M_x} * \underbrace{\begin{vmatrix} a_1 \\ a_2 \\ \vdots \\ a_m \end{vmatrix}}_{A} = \underbrace{\begin{vmatrix} y(1) \\ y(2) \\ \vdots \\ y(n) \end{vmatrix}}_{Y}; \qquad (5)$$

It can be deduced from the results above that in digital predistortion technique the stability of the system of equations is the major problem. Even in stable system with orthogonal matrix the range of possible parameter error $\Delta A$ is large.

The basic idea of the invention is to solve the matrix equation by an iterative method, e.g. by the Gauss-Seidel method or the successive overrelaxation method, so that the problem of bad condition number of the matrix $M_x$ is avoided. The matrix $M_x$ is decomposed according to equation (6), and the matrix equation is solved iteratively according to equation (7). The decomposition must fulfil the convergence condition according to equation (8). The initial values $A^{(0)}$ of the predistortion parameters can be freely chosen, and the matrix $N$ should not be singular.

$$M_x \cdot A = Y;$$

$$M_x = N - P \text{ (decomposition)} \qquad (6)$$

$$N \cdot A^{(k+1)} = P \cdot A^{(k)} + Y; \qquad (7)$$

convergence condition

$$\left\| N^{-1} \cdot P \right\| < 1; \qquad (8)$$

In an embodiment of the invention, the Gauss-Seidel method is used for iteratively solving the matrix equation $M_x \cdot A = Y$, however other methods as e.g. the successive overrelaxation method can be used.

In order to guarantee the convergence of the Gauss-Seidel and successive overrelaxation method, the matrix $M_x$ must be Hermitian positive definite. As obviously the matrix $M_x$ is not a Hermitian matrix, in equation (9) both sides of the matrix equation $M_x \cdot A = Y$ are multiplied by the Hermitian conjugate matrix $M_x^H$ of matrix $M_x$ in order to fulfil the condition of being a Hermitian matrix according to equations (10) and (11).

The matrix $MG$ needs to be proven to be positive definite. There are several equivalent properties to prove a positive definite matrix. Here the property shown in equation (12) is used to prove that the matrix $MG$ is positive definite. In the proof shown in equations (13)-(18) we see, that the matrix $MG$ is always non-negative definite, in most cases positive definite, independent on the algorithm of the digital predistortion system and input signals. The tested Gauss-Seidel method was always convergent in simulation and hardware test.

$$M_x \cdot A = Y;$$

$$\underbrace{(M_x^H \cdot M_x)}_{MG} \cdot A = M_x^H \cdot Y; \Rightarrow MG \cdot A = M_x^H \cdot Y; \tag{9}$$

$$MG = M_x^H \cdot M_x =$$

$$\begin{vmatrix} \overline{x_{11}} & \overline{x_{21}} & \cdots & \overline{x_{n1}} \\ \overline{x_{12}} & \overline{x_{22}} & \cdots & \overline{x_{n2}} \\ \vdots & \vdots & \ddots & \vdots \\ \overline{x_{1m}} & \overline{x_{2m}} & \cdots & \overline{x_{nm}} \end{vmatrix} \cdot \begin{vmatrix} x_{11} & x_{12} & \cdots & x_{1m} \\ x_{21} & x_{22} & \cdots & x_{2m} \\ \vdots & \vdots & \ddots & \vdots \\ x_{n1} & x_{n2} & \cdots & x_{nm} \end{vmatrix} = \begin{vmatrix} \sum_{i=1}^{n}|x_{i1}|^2 & \sum_{i=1}^{n}\overline{x_{i1}} \cdot x_{i2} & \cdots & \sum_{i=1}^{n}\overline{x_{i1}} \cdot x_{im} \\ \sum_{i=1}^{n}\overline{x_{i2}} \cdot x_{i1} & \sum_{i=1}^{n}|x_{i2}|^2 & \cdots & \sum_{i=1}^{n}\overline{x_{i2}} \cdot x_{im} \\ \vdots & \vdots & \ddots & \vdots \\ \sum_{i=1}^{n}\overline{x_{im}} \cdot x_{i1} & \sum_{i=1}^{n}\overline{x_{im}} \cdot x_{i2} & \cdots & \sum_{i=1}^{n}|x_{im}|^2 \end{vmatrix}; \tag{10}$$

$$with \ a_{uv} = \sum_{i=1}^{n}\overline{x_{iu}} \cdot x_{iv} = \overline{\sum_{i=1}^{n} x_{iu} \cdot \overline{x_{iv}}} = \overline{\sum_{i=1}^{n}\overline{x_{iv}} \cdot x_{iu}} = \overline{a_{vu}}; \tag{11}$$

$\Rightarrow$ *MG* is Hermitian *definite.*

For all non - zero complex vectors z $\in$ C$^n$,

$$z^H \cdot M_x \cdot z > 0; \tag{12}$$

$$\text{Proof } z^H \cdot MG \cdot z > 0; \tag{13}$$

$$z^H \cdot MG \cdot z \tag{14}$$

$$= z^H \cdot (M_x^H \cdot M_x) \cdot z, \quad \text{with } MG = (M_x^H \cdot M_x) \tag{15}$$

$$= (z^H \cdot M_x^H) \cdot (M_x \cdot z) \tag{16}$$

$$= (M_x \cdot z)^H \cdot (M_x \cdot z) \quad \text{with } (z^H \cdot M_x^H) = (M_x \cdot z)^H \tag{17}$$

$$= \sum_{i=1}^{n}|a_i|^2 \geq 0 \qquad \text{with } (M_x \cdot z) = [a_1, a_2 \cdots a_n]^T \quad a_i \in C \tag{18}$$

Applying the Gauss-Seidel method, as shown in equation (20), the matrix $M_x^H \cdot M_x$ is decomposed in the matrices *L, D* and *U,* that represent the diagonal, strictly lower triangular and strictly upper triangular parts of the matrix $M_x^H \cdot M_x$ respectively, as shown in equations (21a), (21b) and (21c). The iterative calculation of the vector $A^k$ with usage of said decomposed matrices *L, D* and *U* and with k denoting the iteration step is given in equation (22). The iterative calculation of the single predistortion parameters $a_j^k$ comprised in the vector $A^k$ is given in equation (23).

When the variation of two successive sets of predistortion parameters $A^{k+1}$ and $A^k$ is smaller than a predefined value $\varepsilon$, or the difference of both sides of the equation (19) is smaller than said predefined value $\varepsilon$, the iteration can be stopped. Said break conditions are given in equations (24a) and (24b).

In an embodiment of the invention, instead of stopping the iterative calculation of the vector $A$ when a dedicated level of convergence is achieved, the iterative calculation of the vector $A$ is stopped after a dedicated number of iterative steps.

When the predistorter learning device PLD has finished the iterative calculation of the predistortion parameters comprised in vector $A$, the predistorter learning device PLD sends the predistortion parameters to the predistorter PD, and the predistorter PD applies said predistortion parameters for predistortion of signals.

Preferably, the predistortion parameters are calculated offline in the predistorter learning device PLD and are then downloaded in the predistorter PD. However, the predistorter learning device PLD and the predistorter PD can also be colocated in the same device, and the predistortion parameters can be calculated during operation, i.e. online.

$$M_x \cdot A = Y;$$

$$\left(M_x^H \cdot M_x\right) \cdot A = M_x^H \cdot Y; \tag{19}$$

$$\left(M_x^H \cdot M_x\right) = L + D + U; \tag{20}$$

$$L = \begin{vmatrix} 0 & 0 & 0 & \cdots \\ x_{21} & 0 & 0 & \cdots \\ x_{31} & x_{32} & 0 & \cdots \\ \vdots & \vdots & \vdots & \cdots \end{vmatrix}; \quad U = \begin{vmatrix} 0 & x_{12} & x_{13} & \cdots \\ 0 & 0 & x_{23} & \cdots \\ 0 & 0 & 0 & \cdots \\ \vdots & \vdots & \vdots & \cdots \end{vmatrix}; \quad D = \begin{vmatrix} x_{11} & 0 & 0 & \cdots \\ 0 & x_{22} & 0 & \cdots \\ 0 & 0 & x_{33} & \cdots \\ \vdots & \vdots & \vdots & \cdots \end{vmatrix}; \tag{21a-c}$$

$$\underbrace{(D+L)}_{N} \cdot A^{(k+1)} = \underbrace{-U}_{P} \cdot A^k + Y; \tag{22}$$

$$a_i^{k+1} = \frac{1}{x_{ii}} \cdot (-\sum_{j=1}^{i-1} x_{ij} \cdot a_j^{k+1} - \sum_{j=i+1}^{n} x_{ij} \cdot a_j^k + y_i); \tag{23}$$

Break Condition

$$\max\left|A^{(k+1)} - A^{(k)}\right| < \varepsilon \quad or \quad \max\left|\left(M_x^H \cdot M_x\right) \cdot A^{(k+1)} - M_x^H \cdot Y\right| < \varepsilon \tag{24a,b}$$

The whole digital predistortion system is preferably implemented in a high speed Field Programmable Gate Array (FPGA).

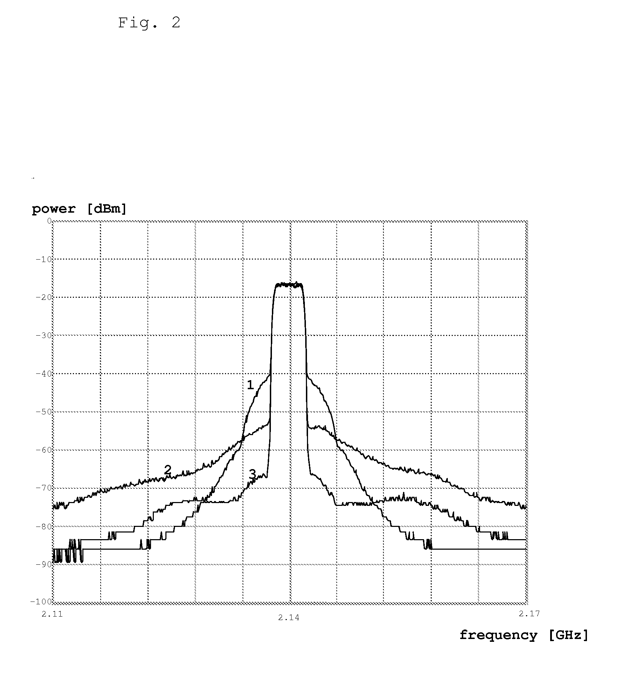

For benchmarking of the invention, different measurements of the output spectrum of the power amplifier PA have been carried out for so-called Doherty power amplifiers with an average output power of 50W and 1 carrier UMTS test signal. The measurement results are shown in figure 2 where 3 different output spectra are depicted over the frequency.

The spectrum denoted with the number 1 is a power amplifier output spectrum where no digital predistortion has been applied. It can be clearly seen that the Adjacent Channel Leakage Ratio (ACLR ) is worse than -32 dBc and the specification of the so-called spectrum emission mask is not fulfilled.

The spectrum denoted with the number 2 is a power amplifier output spectrum where a least mean square (LMS) method has been applied for the digital predistortion system with one main tap and 5 memory taps. Each tap uses a so-called piecewise polynomial predistorter algorithm, wherein the input signal $Y$ of the power amplifier PA is divided into intervals. Said piecewise polynomial predistorter algorithm is described in the European patent application EP 03291281.8 in detail. The spectrum 2 shows a beginning of divergence.

The spectrum denoted with the number 3 is a power amplifier output spectrum where a Gauss-Seidel method has been applied for calculation of parameters of the digital predistortion with the same piecewise polynomial predistorter algorithm with one main tap and five memory taps as used for the spectrum denoted with the number 2. This spectrum 3 has the best ACLR value of all spectra, which is below -55dBc in both sides with 5MHz offset.

The digital predistortion system with LMS method is divergent, whereas the digital predistortion system with Gauss-Seidel method is still stable and shows very good suppression of the adjacent channel leakage and correction of the error vector magnitude.

This means, that the stability of the digital predistortion system is increased by using an iterative method to solve the digital predistortion equation system. Therefore the degree of freedom of digital predistortion algorithms can be increased, e.g. by means of raising the order of polynomial in polynomial digital predistortion without facing the problem of stability when using an iterative method as e.g. the Gauss-Seidel method for calculation of the predistortion parameters. Without the problem of stability, the degree of freedom of different digital predistortion algorithms can be fully utilized to improve the digital predistortion performance concerning ACP suppression (ACP = adjacent channel power) and EVM correction.

In an embodiment of the invention, the digital predistortion system as described above can e.g. be comprised in a transmitter for radio frequency transmission in a wireless communication network, i.e. the transmitter is in turn comprised in a base station or a mobile station of the wireless communication network.

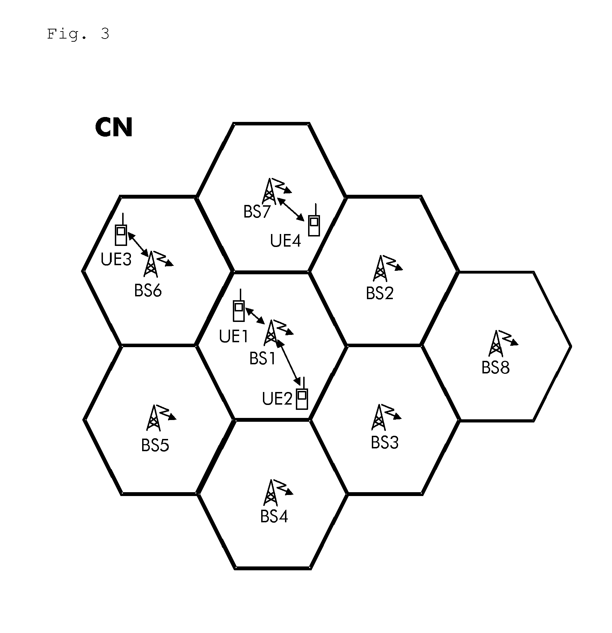

Fig. 3 schematically shows a cellular wireless communication system CN with mobile stations T1-T4 and base stations BS1-BS8 in which the invention can be implemented

Each of said mobile stations T1-T4 is connected to one or multiple of said base stations BS1-BS8, which is symbolized by double arrows in fig. 3. The base stations BS1-BS8 are in turn connected to a core network, which is not shown in fig. 3 for the sake of simplicity.

**Claims**

1.  A method for calculating a vector $A$ comprising predistortion parameters for a predistorter (PD) of a power amplifier (PA) using a matrix equation $M_x \cdot A = Y$ with a matrix $M_x$ based on output values of the power amplifier (PA) and a vector $Y$ based on input values of the power amplifier (PA) **characterized in, that**

    • the matrix $M_x$ is decomposed to $M_x = N - P$,
    • the decomposition $M_x = N - P$ fulfills the convergence condition $\|N^{-1} \cdot P\| < 1$,
    • an iterative solution with k iterative steps for solving the matrix equation is applied according to $N \cdot A^{(k+1)} = P \cdot A^{(k)} + Y$,
    • and the predistortion parameters comprised in the vector $A$ are applied in the predistorter (PD) for predistortion of signals before the signals are sent to the power amplifier (PA).

2.  A method according to claim 1, **characterized in, that** the matrix equation is iteratively solved using the Gauss-Seidel method or the successive overrelaxation method.

3.  A method according to claim 1, **characterized in, that** the iterative solution is stopped when a dedicated level of convergence is achieved.

4.  A method according to claim 1, **characterized in, that** the iterative solution is stopped after a dedicated number of iterative steps.

5.  A method according to claim 1, **characterized in, that** the predistortion parameters are calculated offline in a predistorter learning device (PLD) and then downloaded in the predistorter (PD).

6.  A transmitter for signal transmission comprising a predistorter (PD), a power amplifier (PA) and a predistorter learning device (PLD), the predistorter learning device (PLD) comprising at least one processing means adapted to calculate predistortion parameters $A$ for a predistorter (PD) of a power amplifier (PA) using a matrix equation $M_x \cdot A = Y$ with a

matrix $M_x$ based on output values of the power amplifier (PA) and a vector $Y$ based on input values of the power amplifier (PA) **characterized in, that** said at least one processing means is adapted

- to perform a decomposition of the matrix $M_x$ to $M_x = N - P$ with the decomposition $M_x = N - P$ fulfilling the convergence condition $\|N^{-1} \cdot P\| < 1$,
- and to solve the matrix equation iteratively with k iterative steps according to $N \cdot A^{(k+1)} = P \cdot A^{(k)} + Y$.

**7.** A base station (BS1-BS8) for radio transmission comprising at least one transmitter for signal transmission, said at least one transmitter comprising a predistorter (PD), a power amplifier (PA) and a predistorter learning device (PLD), the predistorter learning device (PLD) comprising at least one processing means adapted to calculate predistortion parameters $A$ for a predistorter (PD) of a power amplifier (PA) using a matrix equation $M_x \cdot A = Y$ with a matrix $M_x$ based on output values of the power amplifier (PA) and a vector $Y$ based on input values of the power amplifier (PA) **characterized in, that** said at least one processing means is adapted

- to perform a decomposition of the matrix $M_x$ to $M_x = N - P$ with the decomposition $M_x = N - P$ fulfilling the convergence condition $\|N^{-1} \cdot P\| < 1$,
- and to solve the matrix equation iteratively with k iterative steps according to $N \cdot A^{(k+1)} = P \cdot A^{(k)} + Y$.

**8.** A mobile station (UE1-UE4) for radio transmission comprising at least one transmitter for signal transmission, said at least one transmitter comprising a predistorter (PD), a power amplifier (PA) and a predistorter learning device (PLD), the predistorter learning device (PLD) comprising at least one processing means adapted to calculate predistortion parameters $A$ for a predistorter (PD) of a power amplifier (PA) using a matrix equation $M_x \cdot A = Y$ with a matrix $M_x$ based on output values of the power amplifier (PA) and a vector $Y$ based on input values of the power amplifier (PA) **characterized in, that** said at least one processing means is adapted

- to perform a decomposition of the matrix $M_x$ to $M_x = N - P$ with the decomposition $M_x = N - P$ fulfilling the convergence condition $\|N^{-1} \cdot P\| < 1$,
- and to solve the matrix equation iteratively with k iterative steps according to $N \cdot A^{(k+1)} = P \cdot A^{(k)} + Y$.

**9.** A communication network (CN) comprising at least one base station (BS1-BS8) or at least one mobile station (UE1-UE4) for radio transmission comprising at least one transmitter for signal transmission, said at least one transmitter comprising a predistorter (PD), a power amplifier (PA) and a predistorter learning device (PLD), the predistorter learning device (PLD) comprising at least one processing means adapted to calculate predistortion parameters $A$ for a predistorter (PD) of a power amplifier (PA) using a matrix equation $M_x \cdot A = Y$ with a matrix $M_x$ based on output values of the power amplifier (PA) and a vector $Y$ based on input values of the power amplifier (PA) **characterized in, that** said at least one processing means is adapted

- to perform a decomposition of the matrix $M_x$ to $M_x = N - P$ with the decomposition $M_x = N - P$ fulfilling the convergence condition $\|N^{-1} \cdot P\| < 1$,
- and to solve the matrix equation iteratively with k iterative steps according to $N \cdot A^{(k+1)} = P \cdot A^{(k)} + Y$.

Fig. 1

Fig. 2

power [dBm]

frequency [GHz]

Fig. 3

| | Europäisches Patentamt European Patent Office Office européen des brevets | **EUROPEAN SEARCH REPORT** | Application Number EP 08 30 5399 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DING, L., ET AL: "A Least-Squares/Newton Method for Digital Predistortion of Wideband Signals" IEEE TRANSACTIONS ON COMMUNICATONS, vol. 54, 5 May 2006 (2006-05-05), pages 833-840, XP002514074 * paragraph [IV.A] * ----- | 1,6-9 | INV. H04L27/36 |
| A | MOHAMED HELAOUI ET AL: "Short term memory effects study for optimal predistortion-based linearization of base-stations wireless transmitters" MICROWAVE CONFERENCE, 2006. APMC 2006. ASIA-PACIFIC, IEEE, PI, 1 December 2006 (2006-12-01), pages 1044-1047, XP031201649 ISBN: 978-4-902339-08-6 from eq. 8 to eq. 10 * figure 4 * ----- | 1,6-9 | |
| E | EP 1 983 659 A (TELASIC COMM INC [US]) 22 October 2008 (2008-10-22) * paragraph [0216] - paragraph [0219] * ----- | 1-3,5-7 | TECHNICAL FIELDS SEARCHED (IPC) H04L |

The present search report has been drawn up for all claims

| Place of search | Date of completion of the search | Examiner |
|---|---|---|
| Berlin | 9 February 2009 | Farese, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

EP 2 146 474 A1

## ANNEX TO THE EUROPEAN SEARCH REPORT
## ON EUROPEAN PATENT APPLICATION NO.

EP 08 30 5399

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2009

| Patent document cited in search report | | Publication date | Patent family member(s) | | Publication date |
|---|---|---|---|---|---|
| EP 1983659 | A | 22-10-2008 | US | 2008260066 A1 | 23-10-2008 |

EPO FORM P0459

For more details about this annex : see Official Journal of the European Patent Office, No. 12/82

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 03291281 A

**Non-patent literature cited in the description**

- **Lei Ding et al.** A Least-Squares/Newton Method for Digital Predistortion of Wideband Signals. *IEEE Transactions on Communications,* May 2006, vol. 54 (5), 833-840